# EUROPEAN PATENT APPLICATION

(11) **EP 1 092 610 A2**
(43) Date of publication of application: **18.04.2001**
(21) Application number: 00122187.8
(22) Date of filing: 12.10.2000
(51) Int. Cl.: B62D 3/12, B21K 1/76

(54) **Rack bar and production method for the same**

(30) Priority: 14.10.1999 JP 29292799
(71) Applicant: TOYOTA JIDOSHA KABUSHIKI KAISHA, Aichi-ken 471-8571 (JP); TRW Automotive Japan Co. Ltd., Kasugai-shi, Aichi-ken,486-0901 (JP)
(72) Inventor: Fujii, Tomomi, Toyota-shi, Aichi-ken, 471-8571 (JP); Akiyama, Kazuhiro, Toyota-shi, Aichi-ken, 471-8571 (JP); Ozeki, Keita, -cho, Kasugai-shi, Aichi-ken, 486-0901 (JP)
(74) Representative: Leson, Thomas Johannes Alois, Dipl.-Ing.

(57) **Abstract**

A rack bar (10) whose rack teeth (12a) are formed by disposing a die having a rack teeth-forming portion on an outer peripheral surface of a tubular member, and by inserting a pressing member into the tubular member. The tooth height of the rack teeth (12a) is at most 1.5 times the teeth bottom wall thickness and the helical angle is less than or equal to 20°.

## Description

### BACKGROUND OF THE INVENTION

### 1. Field of the Invention

The invention relates to a rack bar that is a component member of a vehicular steering apparatus, and to a method for producing the rack bar.

### 2. Description of Related Art

A rack bar that is formed by (1) positioning a die having a rack teeth-forming portion on an outer peripheral surface of a tubular member (material member of a rack bar), and (2) inserting a pressing member into the tubular member so that a portion of the tubular member is pressed out toward the rack teeth-forming portion is known in the art (see Japanese Patent Application Laid-Open No. 9-86420). Thus, rack teeth are formed between the rack teeth-forming portion and the pressing member. In known rack bar, sufficient consideration is not given to the dimensional ratio between the rack tooth height and the teeth bottom wall thickness.

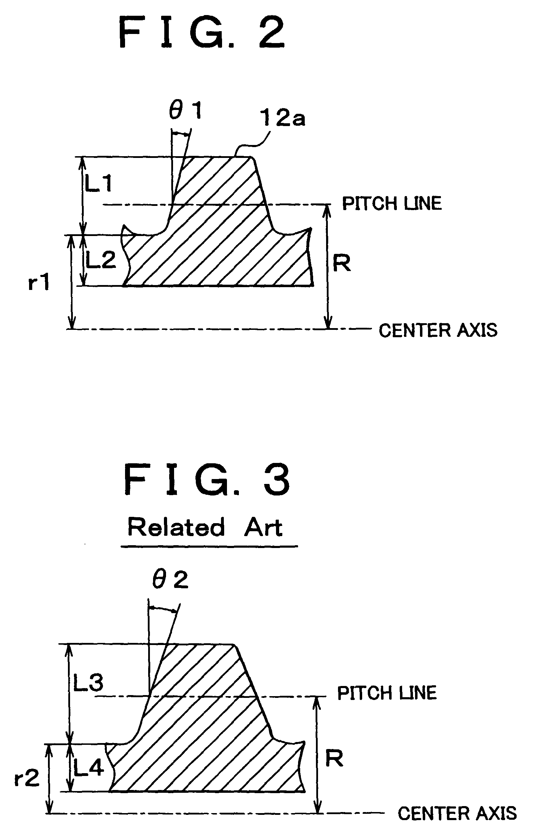

In a rack bar, dimensions of various portions of rack teeth (dimensional specifications meaning the dimension from a center axis to a pitch line) are set with reference to the center axis of the rack bar. FIG. 3 shows a sectional view of a rack tooth of a known rack bar. According to the conventional art, dimensional specifications of rack teeth formed by machining are adopted. In a typical rack bar as shown in FIG. 3, a rack tooth height L3 is set to about twice the bottom wall thickness L4, and a pressure angle θ2 is set to 20°, and a helix angle is set to 0°.

In rack bars as described above, the volume of each of the rack teeth portion formed by the pressing member pressing it out toward each of the rack teeth-forming portions of the die (i.e., the amount of displaced metal of the tubular member) is large, such that the formability of rack teeth is not good and the formation of rack teeth with sufficiently high quality is difficult. There are also cases where a large enough dimension r2 from the center axis to each of the teeth bottom cannot be secured, so that it is difficult to have a large enough bending strength of the bottom portion. A large enough bending strength of the bottom portion can be secured by increasing the wall thickness of the tubular member, that is, the material of the rack bar. However, this results in an increased weight of the rack bar, and an increased production cost.

### SUMMARY OF THE INVENTION

The invention is intended to cope with the aforementioned problems. In the rack bar according to one aspect of the invention, the tooth height is at most 1.5 times the tooth bottom wall thickness.

Therefore, the amount of metal displacement that occurs when a portion of the tubular member is pressed into the die to form rack teeth by inserting a pressing member into the tubular member is reduced. Hence, the forming rate of rack teeth can be increased, and formed quality of the rack teeth can be improved.

In the above-described construction, the dimension from the center axis of the rack bar to the bottom of the rack teeth increased, so that the bending strength of the rack bar is increased. Furthermore, the volume of the rack teeth is reduced, so that the wall thickness of the rack bar material tubular member is reduced and therefore the weight of the rack bar is reduced.

Further, the helix angle may be increased to greater than zero and less than about 20°.

Although this summary does not disclose all the features of the present invention, it is to be understood that any combination of the features stated in the dependent claims is within the scope of the present invention.

### BRIEF DESCRIPTION OF THE DRAWINGS

The foregoing and further objects, features and advantages of the invention will become apparent from the following description of a preferred embodiment with reference to the accompanying drawings, wherein like numerals are used to represent like elements and wherein:
FIG. 1 is a partial sectional view of a rack bar according to the invention;
FIG. 2 is a sectional view of a rack tooth;
FIG. 3 is a sectional view of a related-art rack tooth;
FIG. 4A is a diagram illustrating a production process of the rack bar according to the invention;
FIG. 4B is a diagram illustrating a production process of the rack bar according to the invention;
FIG. 4C is a diagram illustrating a production process of the rack bar according to the invention; and
FIG. 4D is a diagram illustrating a production process of the rack bar according to the invention.

### DETAILED DESCRIPTION OF PREFERRED EMBODIMENT

A preferred embodiment of the invention will be described hereinafter with reference to the accompanying drawings.

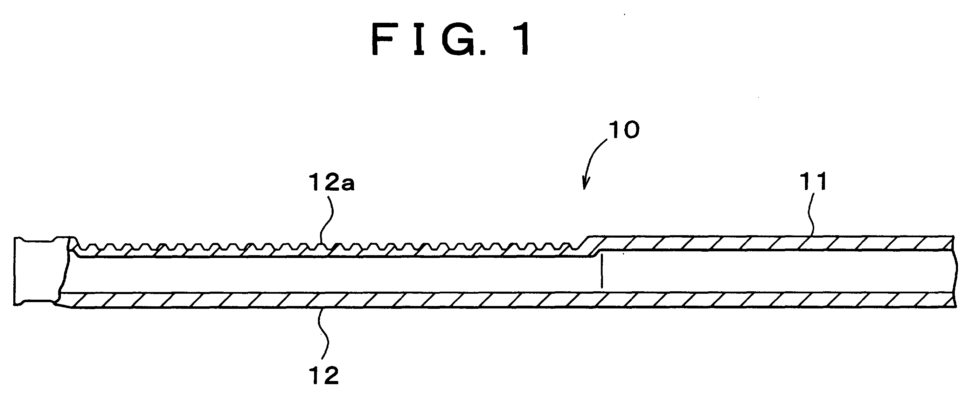

FIG. 1 shows a rack bar 10 according to the invention. The rack bar 10 is formed from a material tubular member (steel pipe). The rack bar 10 has a rod portion 11 extending to the right in FIG. 1 and a toothed portion 12 extending leftward continuously from the rod portion 11.

The rod portion 11 has a substantially circular sectional shape, and is provided with a piston (not shown) that is connected to a central site of the rod portion 11 in the direction of an axis thereof. The piston is fitted to an oil seal (not shown) mounted on a cylinder portion of a power cylinder (not shown) so that the piston is slidable in both directions of the axis.

The toothed portion 12 has many rack teeth 12a arranged along the length of the toothed portion 12. The rack teeth 12a mesh with a pinion (not shown).

The rack teeth 12a have various settings with different dimensions as indicated in FIG. 2. For example, the settings are made so that the tooth height L1 is at most 1.5 times a bottom wall thickness L2, and so that the pressure angle θ1 equals 14.5°. When viewed from above, each rack tooth 12a extends from one side of the rack bar to the opposite side with a helix angle that is greater than 0° and less than or equal to 20° (0 degree < helix angle ≤ 20 degrees). Various rack teeth dimensions according to the teeth specifications of the pinion are set so that the pinion meshes with the rack teeth 12a. The dimension R from a center axis of the rack bar 10 to a pitch line is the same as the conventional rack bar shown in FIG. 3.

The process of forming the toothed portion 12 of the rack bar 10 of this embodiment will be described below.

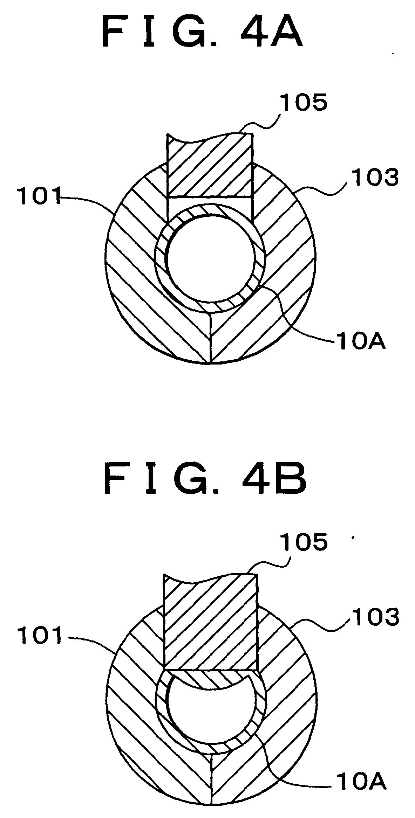

First, a tubular member 10A is set in split dies 101, 103 that have an upper opening (FIG. 4A). Then, a portion of the outer periphery of the tubular member 10A is punched by forcing the flat bottom surface of press die 105 down via the upper opening (FIG. 4B).

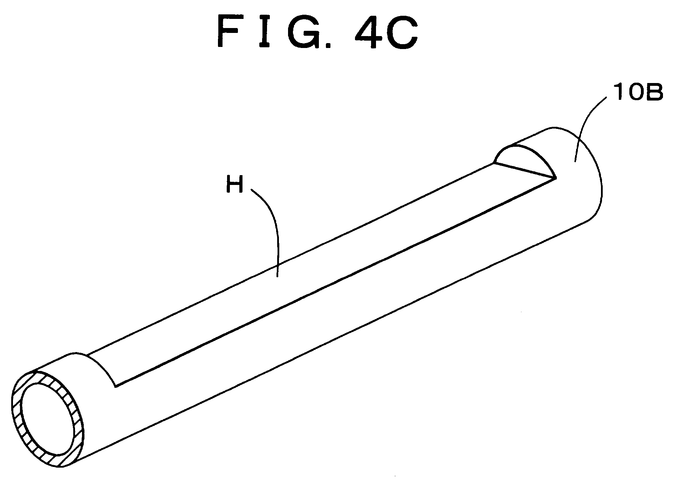

As a result, a first rack bar 10B having a flat region H is formed (FIG. 4C).

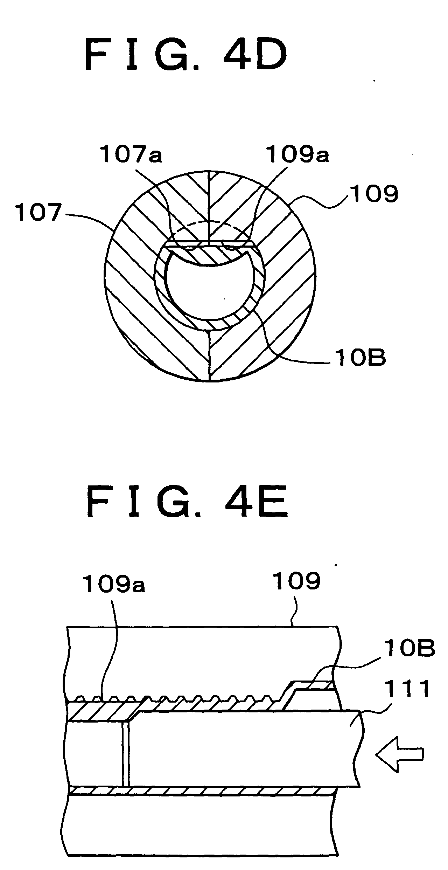

Next, the first rack bar 10B is set in split dies 107, 109 (FIG. 4D). The split dies 107, 109 have, on their upper internal peripheral surfaces, rack teeth-forming portions 107a, 109a, respectively. Subsequently, a punch 111 (pressing member) is inserted into the first rack bar 10B to press a portion (upper portion) of the first rack bar 10B out toward the rack teeth-forming portions 107a, 109a of the split dies 107, 109, thereby sequentially forming rack teeth (cold forming) (see FIG. 4E). Configurations of the rack teeth-forming portions 107a, 109a are set such that the rack tooth height L1 of the rack bar 10 becomes at most 1.5 times the bottom wall thickness L2, and so that the pressure angle θ1 becomes equal to 14.5 degrees.

Since the tooth height L1 of each of the rack teeth 12a is at most 1.5 times the bottom wall thickness L2 in the rack bar 10 of this embodiment formed as described above, the amount of metal displacement occurring when a portion of the tubular member 10A is pressed out toward the split dies 107, 109 to form each of the rack teeth 12a by inserting the punch 111 into the tubular member 10A can be reduced. Therefore, the forming rate of each of the rack teeth 12a can be reduced, and the forming quality of each of the rack teeth 12a can be improved.

Furthermore, the rack bar 10 of this embodiment allows an increase in the distance r1 from the center axis to the bottom of the rack teeth 12a, so that the bending strength of the rack bar 10 can be increased and the volume of the rack teeth 12a can be reduced. Still further, the ,material of tubular member 10A is allowed to have a reduced wall thickness, so that a weight reduction is achieved.

Further, the rack teeth 12a of the rack bar 10 of the embodiment are angled at a helical angle greater than zero and less than or equal to 20 degrees (0 degree < helical angle ≤ 20 degrees). Therefore, when the punch 111 is inserted into the tubular member 10A during the production process of the rack bar 10, each rack tooth 12a is formed in such a manner that material of the tubular member 10A is pressed out gradually from one end portion to the opposite end portion of the tooth in the direction of the tooth width. Therefore, the material flow is facilitated, so that formability improves, thereby contributing to an improvement in the quality of the rack teeth 12a.

While the invention has been described with reference to preferred embodiments thereof, it is to be understood that the invention is not limited to the disclosed embodiments or constructions. On the contrary, the invention is intended to cover various modifications and equivalent arrangements. In addition, while the various elements of the disclosed invention are shown in various combinations and configurations, which are exemplary, other combinations and configurations, including more, less or only a single element, are also within the spirit and scope of the invention.

## Claims

1. A rack bar (10) having a body (11) with a hollow cross section; and rack teeth (12a) formed in a portion of the body so as to mesh with a pinion, wherein a height of the rack teeth (L1) is at most 1.5 times a teeth bottom wall thickness (L2).

2. The rack bar according to claim 1, wherein the rack teeth (12a) have a helix angle greater than zero and less than about 20°.

3. A method for producing a rack bar (10), the method characterized by comprising:
placing a die having a rack teeth-forming portion (107a, 109a) on at least a portion of an outer peripheral surface of a tubular member (10A);
inserting a pressing member (111) into the tubular member (10A); and
forming rack teeth (12a) between the rack teeth-forming portion (107a, 109a) and the pressing member (111) by pressing a portion of the tubular member toward rack teeth-forming portion (107a, 109a),
wherein a height of the rack teeth (L1) is at most 1.5 times a teeth bottom wall thickness(L2).

4. A rack bar (10) produced in accordance with the method of claim 3.

5. The method according to claim 3, wherein the rack teeth (12a) formed have a helix angle greater than zero and less than about 20°.
A rack bar whose rack teeth are formed by disposing a die having a rack teeth-forming portion on an outer peripheral surface of a tubular member, and by inserting a pressing member into the tubular member. The tooth height of the rack teeth is at most 1.5 times the teeth bottom wall thickness and the helical angle is less than or equal to 20°.
